# EUROPÄISCHE PATENTSCHRIFT

(11) **EP 2 126 391 B1**
(45) Veröffentlichungstag und Bekanntmachung des Hinweises auf die Patenterteilung: **22.02.2012**
(21) Anmeldenummer: 07856139.6
(22) Anmeldetag: 12.12.2007
(51) Int. Cl.: F16D 25/08

(54) **FEDERDRUCK-LAMELLENKUPPLUNG FÜR KOMPRESSOREN**
SPRING PRESSURE MULTIPLATE CLUTCH FOR COMPRESSORS
EMBRAYAGE MULTIDISQUES À PRESSION DE RESSORT POUR COMPRESSEURS

(30) Priorität: 15.12.2006 DE 202006019190 U
(43) Veröffentlichungstag der Anmeldung: 02.12.2009
(73) Patentinhaber: WABCO GmbH, 30453 Hannover (DE)
(72) Erfinder: SPENSBERGER, Christoph, 01744 Dippoldiswalde OT Paulsdorf (DE); PRETSCH, Andreas, 30880 Laatzen (DE); WINTER, Detlev, 30449 Hannover (DE); AKEMANN, Volker, 30659 Hannover (DE); GROSSKOPF, Joachim, 30952 Ronnenberg (DE); HERZOG, Stefan, 30982 Pattensen (DE)
(74) Vertreter: Hempel, Hartmut
(86) Internationale Anmeldenummer: PCT/DE2007/002295
(87) Internationale Veröffentlichungsnummer: WO 2008/071185

(56) Entgegenhaltungen:
- FR-A- 2 576 073
- GB-A- 2 182 732
- US-A- 4 648 805

## Beschreibung

Die Erfindung betrifft einen Kompressor mit einer Federdruck-Lamellenkupplung, die aus zwei Kupplungsbaugruppen besteht, von denen die eine Kupplungsbaugruppe einen Antrieb und eine damit in Verbindung stehende Innenlamellenanordnung aufweist und die andere Kupplungsbaugruppe mit einer Kompressorwelle verbunden ist und ein hohles, fingerartig freigeschnittenes Kupplungsgehäuseteil mit einer zugehörigen Außenlamellenanordnung und einem zu einem Kompressorgehäuse gerichteten, zum Kupplungsgehäuseteil gehörenden, scheibenartigen Endteil aufweist, wobei der anderen Kupplungsbaugruppe ein druckluftbeaufschlagbarer, ringförmiger Schaltkolben zugeordnet ist, der bei Druckluftbeaufschlagung eine Freischaltung und bei Druckluftlosigkeit eine Kupplung zwischen den beiden Lamellenanordnungen herbeiführt.

Eine solche Federdruck-Lamellenkupplung ist in der Druckschrift FR 2576073 A beschrieben, wobei den beiden Kupplungsbaugruppen durchgängig die Kompressorwelle zugeordnet ist, wobei dem von der Kompressorwelle unabhängigen Antrieb ein hülsenartiger Innenkörper angeformt ist, der auf der Kompressorwelle drehbar gelagert ist und auf dem die Innenlamellenanordnung befestigt ist, wobei das Kupplungsgehäuseteil mit einer auf der Kompressorwelle befestigten Nabe im Eingriff steht, zwischen der und dem Endteil eine Federanordnung in Vorspannung vorgesehen ist, wobei das Endteil über ein Axialgleitlager dem Schaltkolben gegenüberliegend angeordnet ist, der in einer Ringnut im Kompressorgehäuse integriert und entgegen der Vorspannung der Federanordnung mit dem Endteil zur druckluftgesteuerten axialen Verschiebung des Kupplungsgehäuseteils Kontakt herstellend axial verschiebbar gelagert ist.

Ein Problem besteht darin, dass die in der Federdruck-Lamellenkupplung befindliche Kupplungswelle an der Kompressorwelle des Kompressors befestigt werden muss, was einen erhöhten Arbeitsaufwand darstellt.

Es gibt seit langem den Trend, an Dieselmotoren wegen Kraftstoffeinsparung und wegen Abgasverminderung die Leistungsaufnahmen der Nebenaggregate, insbesondere für den Luftkompressor zu reduzieren. Leistungsaufnahme der Nebenaggregate reduzieren bedeutet unter anderem, den Luftkompressor, der für die Luftversorgung eines Fahrzeuges vorgesehen ist, insbesondere bei Überdruckbelastung durch eine luftdruckgesteuerte Federdruck-Lamellenkupplung abzuschalten.

Ein Kompressor ist in der Druckschrift DE 35 11 607 A1 beschrieben, wobei die Kompressorwelle von einer von der Kompressorwelle getrennten, treibenden Zwischenwelle über eine Lamellenkupplung angetrieben wird, die über eine Tellerfederanordnung eingerückt gehalten ist. Die Lamellenanordnung und die Federanordnung sind in einem hohlen Kupplungsteil mit einer Endkappe enthalten, die, nachdem die Federanordnung in gewünschtem Maße vorgespannt ist, in eine durch die Vorspannung bestimmte Lage gebracht und in dieser befestigt wird.

Die Nabe ist dabei aus dem hohlen Kupplungsteil annähernd konisch herausgeführt und greift auf die von der Zwischenwelle getrennte Kompressorwelle über, auf der sie befestigt ist. Dadurch weist sie in axialer Richtung eine derartige Ausdehnung auf, dass die Kupplung einen über das Kompressorgehäuse ziemlich weit überstehenden Körper darstellt.
Dem steht aber eine beabsichtigte kurze Bauweise der Schaltkupplung entgegen.

Ein Problem besteht auch in der relativ größeren Anzahl vorhandener Lager. Die Zwischenwelle wird in einem Eingangsdeckel durch ein Lager in das gesamte Kompressorgehäuse eingebunden.

Bedingt durch den Übergriff der Nabe aus dem Bereich der treibenden Zwischenwelle auf die Kompressorwelle dreht sich die Nabe auf der Zwischenwelle auf einem Lager. Zusätzlich ist noch ein Lager zwischen Kompressorwelle und Kolben vorhanden.

Ein Problem besteht ebenso darin, dass eine Vielzahl von Bauelementen vorgesehen ist. Demzufolge ist die Montage der Kupplung sehr zeitaufwendig.

Eine ähnliche Antriebskupplung für einen Kompressor ist in der Druckschrift GB 2 182 732 A beschrieben, bei der eine ähnliche Konstruktion mit getrennten Wellen vorhanden ist, die gleiche Probleme aufweist. Dabei ragt die Nabe aus dem hohlen Kupplungsteil ebenso heraus, was bedingt, dass die Drehmomentübertragung ebenfalls aus dem Einbauraum des Kupplungsteils herausgeführt ist.

Eine Antriebskupplung für einen Kompressor ist in der Druckschrift EP 0 853 200 B1 beschrieben, wobei der Kompressor aus einem Gehäuse und einer hin- und herbewegenden Wand besteht, wobei die Wand im Gehäuse so bewegt werden kann, dass sie das Volumen einer Kompressionskammer zyklisch so vergrößert und verkleinert, dass Gas unter Druck induziert und zugeführt wird, wobei die Wand mit einem exzentrischen Lager einer Welle verbunden ist, die in einem Hauptlager des Gehäuses drehbar ist, wobei die Welle durch ein Kupplungsmittel angetrieben werden kann, wobei das Kupplungsmittel durch ein Stellorgan getrennt werden kann, um den Betrieb des Kompressors zu unterbrechen. Das Stellorgan liegt dabei in einer Baugruppe, die einen Antriebsseiten-Enddeckel des Kompressors um das Hauptlager herum einschließt, wobei der Enddeckel und das Stellorgan zumindest teilweise in einem Vorsprung der Kompressionskammer in der Bewegungsrichtung der Wand enthalten ist. Das Zahnrad wird auf die Zwischenwelle zur Kompressorwelle aufgeschraubt.

Der Deckel ist mit Schraubenbolzen an dem Kompressorgehäuse befestigt. In den Deckel ist der Schaltkolben eingepasst. Im Bereich des Kolbens ist ein Axiallager vorhanden.

Mit der Tellerfeder wird auf den Kolben gedrückt, der im Falle einer Druckluftbeaufschlagung das Kupplungsteil verschiebt.

Ein Problem besteht darin, dass eines der Hauptlager für die Kompressorwelle von einem ringförmigen Antriebsseiten-Enddeckel getragen wird, der durch eine aufwendige Montagetechnik an das Kompressorgehäuse angebracht wird, wobei sich an den Enddeckel die Schaltkupplung abschließt.

Ein gattungsgemäßer kompressor ist aus FR-A-2 576 073 bekannt.

Der Erfindung liegt die Aufgabe zugrunde, einen Kompressor mit einer Federdruck-Lamellenkupplung anzugeben, der derart geeignet ausgebildet ist, dass in den dem Kompressor angeschlossenen Druckluftbehältern seitens des Kompressors die Drucklufterzeugung nur bis zu dem vorgegebenen Überdruck durchgeführt wird, wobei die Drehmomentübertragung vom Antrieb bis zur Kompressorwelle gerichtet raumsparend gewährleistet werden kann. Außerdem sollen dabei Bauteile eingespart werden.

Die Aufgabe wird durch die Merkmale des Patentanspruchs 1 gelöst.
In dem Kompressor mit einer Federdruck-Lamellenkupplung, die aus zwei Kupplungsbaugruppen besteht, von denen die eine Kupplungsbaugruppe einen Antrieb und eine damit in Verbindung stehende Innenlamellenanordnung aufweist und die andere Kupplungsbaugruppe mit einer Kompressorwelle verbunden ist und ein hohles, fingerartig freigeschnittenes Kupplungsgehäuseteil mit einer zugehörigen Außenlamellenanordnung und einem zu einem Kompressorgehäuse gerichteten, zum Kupplungsgehäuseteil gehörenden, scheibenartigen Endteil aufweist, wobei der anderen Kupplungsbaugruppe ein druckluftbeaufschlagbarer, ringförmiger Schaltkolben zugeordnet ist, der bei Druckluftbeaufschlagung eine Freischaltung und bei Druckluftlosigkeit eine Kupplung zwischen den beiden Lamellenanordnungen herbeiführt,
wobei den beiden Kupplungsbaugruppen durchgängig die Kompressorwelle zugeordnet ist, wobei dem von der Kompressorwelle unabhängigen Antrieb ein hülsenartiger Innenkörper angeformt ist, der auf der Kompressorwelle drehbar gelagert ist und auf dem die Innenlamellenanordnung befestigt ist, wobei das Kupplungsgehäuseteil mit einer auf der Kompressorwelle befestigten Nabe im Eingriff steht, zwischen der und dem Endteil eine Federanordnung in Vorspannung vorgesehen ist, wobei das Endteil über ein Axialgleitlager dem Schaltkolben gegenüberliegend angeordnet ist, der in einer Ringnut im Kompressorgehäuse integriert und entgegen der Vorspannung der Federanordnung mit dem Endteil zur druckluftgesteuerten axialen Verschiebung des Kupplungsgehäuseteils Kontakt herstellend axial verschiebbar gelagert ist, ist gemäß dem Kennzeichenteil des Patentanspruchs 1
die verjüngte durchgängige Kompressorwelle im Bereich vor der Federdruck-Lamellenkupplung drehgelagert ist, wobei die Verjüngung der Kompressorwelle in mehreren axial gerichteten Abschnitten stufenförmig ausgebildet ist.

Der Endbereich der Kompressorwelle kann mit einem Gewinde versehen sein, auf das eine Befestigungsmutter zur Halterung einer Halterungsscheibe aufschraubbar ist.

Der Antrieb der Kupplung kann eine an dem Innenkörper angeformte Scheibe oder ein an dem Innenkörper angeformtes Zahnrad darstellen.

Des Weiteren kann der Antrieb der Kupplung als mehrteiliger Körper ausgebildet sein, wobei der hülsenartige Innenkörper einen zum Antrieb gerichteten Flansch aufweist, der aus dem Kupplungsgehäuseteil herausgeführt ist und an dem wahlweise eine Zahnkranzscheibe oder eine antriebsgekoppelte Scheibe befestigt ist.

Die Ringnut kann als eine Kompressorgehäuseringnut oder ein in der Kompressorgehäuseringnut zusätzlich eingebrachter, befestigter ringnutartiger Einsatz ausgebildet sein.

Die Nutöffnung der Ringnut ist zum Antrieb gerichtet, wobei die Ringnut innenwandungsseitig mit der druckluftbeaufschlagbaren Fläche des Schaltkolbens einen zum Schaltkolben gehörenden Kolbenraum, dem eine Druckluftleitung zugeführt ist, begrenzt.

Zwischen der Befestigungsmutter und dem innenkörperangeformten Antrieb ist eine Halterungsscheibe für eine die Kompressorwelle umfassende Buchse angebracht.

Die Befestigungsmutter und die Halterungsscheibe können in einer Ausnehmung des innenkörperangeformten Antriebs versenkt sein.

Eine Lagerung ist zwischen der der Kompressorwelle fest zugeordneten Buchse und der Innenwandung des Innenkörpers vorhanden.

Die Lagerung kann wahlweise eine Gleitlagerung oder eine Nadellagerung sein, die aus zwei Nadellagern besteht, wobei auf den beiden Nadellagern der Innenkörper des Antriebs drehbar gelagert ist.

Zwischen der Halterungsscheibe und der Innenwandung der zylindrischen Ausnehmung ist ein geringer Abstand vorhanden.

Die Innenlamellenanordnung ist radial zur Kompressorwellenachse innenrandseitig im hülsenartigen Innenkörper und die andere AuBenlamellenanordnung ist ebenfalls radial gerichtet und außenrandseitig an dem zylinderartigen, hohlen, fingerförmig ausgebildeten und axial gerichtet freigeschnittenen Kupplungsgehäuseteil gehaltert.

In die axialen Freischnitte des Kupplungsgehäuseteils greifen eingepasste Fortsätze der Außenlamellen der Außenlamellenanordnung sowie Fortsätze der Nabe ein.

Das Kupplungsgehäuseteil ist im Bereich der Anformung von Innenkörper und Antrieb durch eine eingebaute Deckelscheibe verschlossen, die an den freien Fingerendbereichen des Kupplungsgehäuseteils befestigt ist.

Zwischen der Nabe und dem Endteil kann die Federanordnung in Form von mindestens einer Tellerfeder zur Vorspannung zwischen Nabe und Endteil angeordnet sein, um eine gesteuerte Verschiebbarkeit des Kupplungsgehäuseteils zu realisieren.

Die Nabe ist mit der Kompressorwelle fest verbunden, wobei die feste Verbindung vorzugsweise als eine Passfederverbindung ausgebildet ist.

Die Nabe kann als eine mit der Kompressorwelle verbundene, vorzugsweise passfedergehalterte Scheibe ausgebildet sein.

Die Tellerfeder kann mit einem Material ausgewählt sein, deren Federkraft einer flachen Kraft-Weg-Kennlinie folgt, wobei mit einer kleinen Wegänderung auch eine sehr kleine Kraftänderung erreichbar ist.

Der ringnutartige Einsatz weist dem Schaltkolben zugewendete Oberflächen auf, die mit erhöhter Güte ausgebildet sind.

Die dem Schaltkolben zugewandte Innenwandung des ringnutartigen Einsatzes weist eine Oberflächenbehandlung auf.

Der Schaltkolben ist über kolbenrandbereichsseitige Dichtungselemente im Kolbenraum oder zum eingebrachten Einsatz abgedichtet.

Die Federdruck-Lamellenkupplung kann vorzugsweise in einem vom Kompressorgehäuse abstehenden Hohlzylindergehäuse montiert und damit geschützt angeordnet sein.

Innerhalb des Einbauraums des Kupplungsgehäuseteils ist somit die komplette Drehmomentübertragung realisiert.

Die Erfindung wird anhand eines Ausführungsbeispiels mittels mehrerer Zeichnungen näher erläutert.
Es zeigen:
- Fig. 1: eine Schnittdarstellung der Federdruck-Lamellenkupplung mit einem Schaltkolben ohne Druckluftbeaufschlagung für einen Kompressor nach dem Stand der Technik,
- Fig. 2: eine Schnittdarstellung der Federdruck-Lamellenkupplung mit Druckluftbeaufschlagung des Schaltkolbens für einen Kompressor nach dem Stand der Technik,
- Fig. 3: eine Schnittdarstellung der Federdruck-Lamellenkupplung nach Fig. 1 und 2 mit einem mehrteiligen Antrieb, wobei an dem Innenkörper ein Zahnkranz angeflanscht ist,
- Fig. 4: eine Schnittdarstellung der Federdruck-Lamellenkupplung mit einem ringförmigen Einsatz im Schaltkolbenbereich und lagergestützten Kompressorwelle nach dem Stand der Technik und
- Fig. 5: eine Schnittdarstellung der Federdruck-Lamellenkupplung des erfindungsgemäßen Kompressors mit einer mit einem Lager versehenen und sich zum Antrieb gerichteten verjüngten Kompressorwelle, deren mit einem Gewinde versehenes Ende im Antriebsbereich mit einer Gewindemutter zur Stützung der Innenkörperhalterung versehen ist.

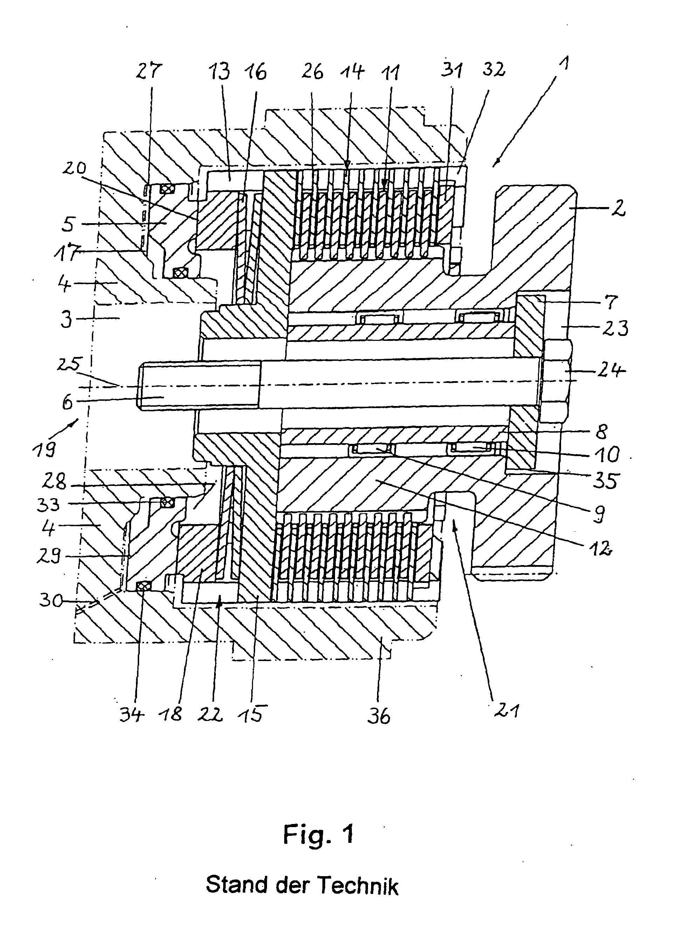

In Fig. 1 ist eine Federdruck-Lamellenkupplung 1 für einen Kompressor 19 nach dem Stand der Technik dargestellt, bestehend aus zwei Kupplungsbaugruppen 21,22, von denen die eine Kupplungsbaugruppe 21 einen Antrieb 2 in Form eines motorgetriebenen Zahnrades und eine Innenlamellenanordnung 11 aufweist und die andere Kupplungsbaugruppe 22 mit einer Kompressorwelle 3 verbindbar ist und ein hohles, fingerartig freigeschnittenes Kupplungsgehäuseteil 13 mit einer zugehörigen Außenlamellenanordnung 14 und einem zum Kompressorgehäuse 4 gerichteten, zum Kupplungsgehäuseteil 13 gehörenden, scheibenartigen Endteil 18 aufweist, wobei der anderen Kupplungsbaugruppe 22 ein druckluftbeaufschlagbarer, ringförmiger Schaltkolben 5 zugeordnet ist, der bei Druckluftbeaufschlagung eine Freischaltung und bei Druckluftlosigkeit eine Kupplung zwischen den beiden Lamellenanordnungen 11,14 herbeiführt.

Den beiden Kupplungsbaugruppen 21,22 ist durchgängig eine Kompressorwelle 3 in Form einer Schraubenwelle 6 zugeordnet, wobei dem von der Kompressorwelle 3 unabhängigen Antrieb 2 ein hülsenartiger Innenkörper 12 angeformt ist, der auf der Kompressorwelle 3 drehbar gelagert ist und auf dem die Innenlamellenanordnung 11 befestigt ist, wobei das Kupplungsgehäuseteil 13 mit einer auf der Kompressorwelle 3 befestigten Nabe 15 im Eingriff steht, zwischen der und dem Endteil 18 eine Federanordnung 16 in Vorspannung vorgesehen ist, wobei das Endteil 18 über ein Axialgleitlager 20 dem Schaltkolben 5 gegenüberliegend angeordnet ist, der in einer Ringnut 27 des Kompressorgehäuses 4 integriert und entgegen der Vorspannung der Federanordnung 16 mit dem Endteil 18 zur druckluftgesteuerten axialen Verschiebung 37 des Kupplungsgehäuseteils 13 Kontakt herstellend axial verschiebbar gelagert ist.

In den den Stand der Technik betreffenden Fig. 1 bis 4 ist die Schraubenwelle 6 als verlängerte Kompressorwelle 3 zur Befestigung der Federdruck-Lamellenkupplung 1 vorgesehen, wobei der zahnradangeformte Innenkörper 12 auf der Schraubenwelle 6 drehbar gelagert ist.

Dabei kann die Nabe 15 mittels einer Passfederverbindung mit der Schraubenwelle 6 fest verbunden sein. Anstelle der Nabe 15 kann auch eine Scheibe eingesetzt sein.

Der Antrieb 2 in Fig. 1 ist als in mit dem Zahnrad vorhandener Innenkörper 12 ausgebildet, wobei anstelle eines Zahnrades 2 auch eine antriebsgekoppelte Scheibe od.dgl. vorgesehen sein kann.
Das Zahnrad 2 und der dem Zahnrad 2 angeformte Innenkörper 12 stellen in den Fig.1,2 und 4,5 einen mit einem Ritzel ausgebildeten einheitlichen Körper dar.

Der Schaltkolben 5 ist in der Kompressorgehäuseringmut 27 gelagert, deren Nutöffnung 28 zum Zahnrad 2 gerichtet ist. Die Kompressorgehäuseringnut 27 begrenzt innenwandungsseitig mit der druckluftbeaufschlagbaren Fläche 29 des Schaltkolbens 5 einen zum Schaltkolben 5 gehörenden Kolbenraum 17, dem eine Druckluftleitung 30 zugeführt ist.

Zwischen dem Schraubenkopf 24 der Schraubenwelle 6 und dem Zahnrad 2 ist eine Halterungsscheibe 7 für eine Lagerbuchse 8 angebracht. Der Schraubenkopf 24 und die Halterungsscheibe 7 können in einer Ausnehmung 23 des Zahnrades 2 versenkt sein, um die Federdruck-Lamellenkupplung 1 bauweisebedingt so kurz wie möglich auszubilden.

Bei der Verschraubung presst der Schraubenkopf 24 die Halterungsscheibe 7 gegen die Buchse 8 und schließlich gegen die an der Kompressorwelle 3 federgehalterte Nabe 15.

Die Lagerung zwischen der in Fig. 1 auf der Schraubenwelle 6 befestigten Buchse 8 und der Innenwandung des Innenkörpers 12 kann als Drehlagerung oder als Nadellagerung ausgebildet sein, wobei Letztere aus zwei Nadellagern 9 und 10 besteht, wobei auf den beiden Nadellagern 9,10 der Innenkörper 12 mit dem ihm angeformten Zahnrad 2 drehbar gelagert ist. Zwischen dem Umfang der Halterungsscheibe 7 und der radialen Innenwandung der zylindrischen Ausnehmung 23 ist ein geringer Abstand 35 vorhanden, so dass sich dadurch der Innenkörper 12 mit dem angeformten Zahnrad 2 berührungsfrei relativ zur Halterungsscheibe 7 drehen kann.

Die Innenlamellenanordnung 11 befindet sich radial zur Kompressorwellenachse 25 innenrandseitig im hülsenartigen Innenkörper 12 des Zahnrades 2 befestigt, die AuBenlamellenanordnung 14 ist ebenfalls radial gerichtet und außenrandseitig an dem zylinderartigen, hohlen, fingerförmig ausgebildeten und axial gerichtet freigeschnittenen Kupplungsgehäuseteil 13 gehaltert. Die freien Enden der Finger sind in Richtung zum Zahnrad 2 gerichtet. In die axialen Freischnitte des Kupplungsgehäuseteils 13 greifen eingepasste Fortsätze 26 der Außenlamellen der Außenlamellenanordnung 14 sowie Fortsatze 23 der Nabe 15 ein. Das Kupplungsgehäuseteil 13 ist im Bereich der Anformung von Innenkörper 12 und Zahnrad 2 durch eine eingebaute Deckelscheibe 31 geschlossen. Die Deckelscheibe 31 ist an den freien Fingerendbereichen 32 des Kupplungsgehäuseteils 13 fest gehaltert. Zwischen der Nabe 15 und dem Endteil 18 ist die Federanordnung 16 in Form von mindestens einer Tellerfeder zur Vorspannung zwischen der Nabe 15 und dem Endteil 18 angeordnet.

Mit dem drehenden Zahnrad 2 drehen sich immer die Innenlamellen der Lamellenanordnung 11, die Außenlamellen der Lamellenanordnung 14 sind in Nachbarschaft zu den Innenlamellen 11 im druckluftlosen Zustand spaltbeabstandet angeordnet. Die Innenlamellen sind dem Kompressorgehäuse 4 näher gerichtet angeordnet als die Außenlamellen.

Im Folgenden wird die Funktionsweise der Federdruck-Lamellenkupplung 1 näher erläutert.
Der Zustand einer Kupplung zwischen den beiden Kupplungsbaugruppen 21,22 besteht gemäß Fig. 1 folgendermaßen darin:
Das Zahnrad 2 und sein angeformter Innenkörper 12 werden durch einen Motor angetrieben und drehen sich unabhängig vom Zustand der pneumatisch lüftbaren Federdruck-Lamellerikupplung 1 um die Kompressorwellenachse 25. Solange keine den Schaltkolben 5 verschiebende Druckluft in dem Kolbenraum 17 eingeleitet wird, presst die Tellerfeder 16 durch ihre Vorspannung das mit dem Endteil 18 fest verbundene Kupplungsgehäuseteil 13 in Richtung zum Kompressorgehäuse 4 und drückt dabei die Außenlamellen der Außenlamellenanordnung 14 an die Innenlamellen der Innenlamellenanordnung 11 zu einem geschlossenen Lamellenpaket zusammen, so dass ein Kraftschluss über das gebildete Lamellenpaket vorhanden ist und weiter über das Kupplungsgehäuseteil 13, die darin gehäuseseitig eingreifende Nabe 15 und die fest mit der Nabe 15 verbundene Schraubenwelle 6 führt. Damit wird die mit der Schraubenwelle 6 fest verbundene Kompressorwelle 3 als komplettierte Kompressorwelle vom innenkörperangeformten Zahnrad 2 fortwährend angetrieben.

Somit liegt vom Zahnrad 2 aus eine durchgängige, aber auch schaltbare Kompressorwelle 3 vor.

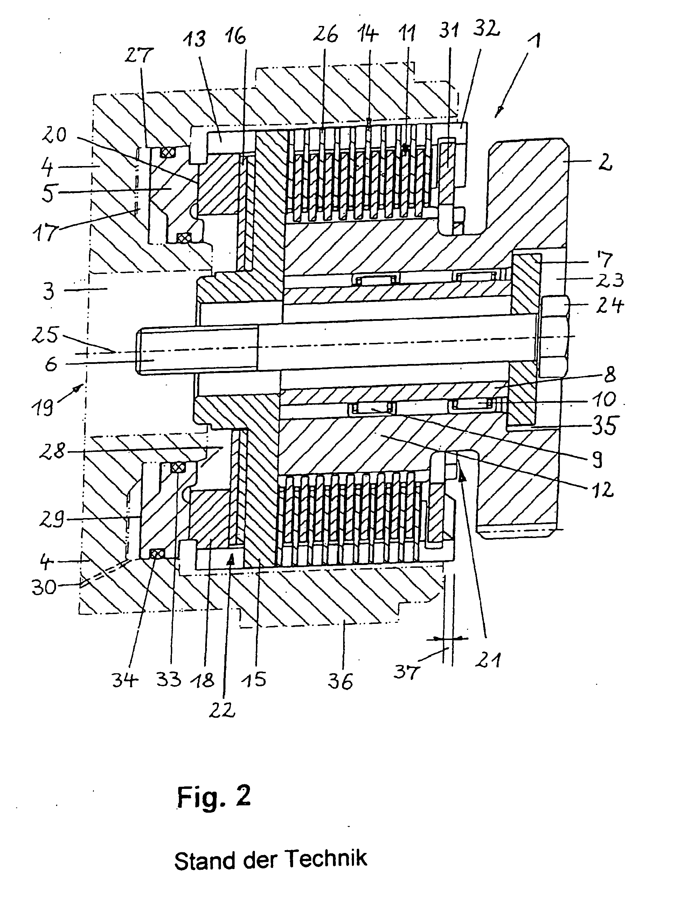

Der Zustand der Freischaltung zwischen den beiden Kupplungsbaugruppen 21,22, der eintritt, wenn der Kompressor 19 die Drucklufterzeugung für die Druckluftbehälter unterbricht, wird gemäß Fig. 2 folgendermaßen erreicht:
Wenn in den Kolbenraum 17 Druckluft geleitet und damit der Schaltkolben 5 mit Druckluft beaufschlagt wird, wird der Schaltkolben 5 im Kolbenraum 17 weg vom Kompressorgehäuse 4 gedrückt und dabei in der Kompressorgehäuseringnut 27 geführt, wobei der Schaltkolben 5 das Endteil 18 des Kupplungsgehäuseteils 13 bewegt. Das Endteil 18 drückt dabei die Tellerfeder 16 zusammen. Mit der Bewegung des Endteils 18 wird auch das Kupplungsgehäuseteil 13 mit den Lamellen der Außenlamellenanordnung 14 weg vom Kompressorgehäuse 4 zum Zahnrad 2 gerichtet verschoben. Bei einer bestimmten Druckkraft des Schaltkolbens 5 lösen sich die Außenlamellen aus dem innigen Kontakt mit den Innenlamellen. Das Lamellenpaket wird gelöst. Obwohl das innenkörperangeformte Zahnrad 2 sich durch seinen Anschluss an den laufenden Motor weiter dreht, rotiert das Kupplungsgehäusetei:l 13 nicht weiter, bleibt stehen, womit der Kraftschluss mit der Schraubenwelle 6 und somit der Kompressorwelle 3 aufgehoben wird. Das Zahnrad 2 mit angeformtem Innenkörper 12 sowie die Innenlamellenanordnung 11 drehen sich von der Schraubenwelle 6 gelöst gemeinsam weiter. Die Außenlamellen 14 stehen still, solange der Schaltkolben 5 mit ausreichender Druckluftbeaufschlagung auf das Endteil 18 drückt.

Im Moment des Übergangs vom Zustand der Kupplung in den Zustand der Freischaltung der Federdruck-Lamellenkupplung 1 rotiert das Endteil 18 noch. Beim Übergang zur Freischaltung wird mit dem stehenden, nunmehr druckluftbeaufschlagten und im Kolbenraum 17 verschobenen Schaltkolben 5 auf das Endteil 18 des Kupplungsgehäuseteils 13 gedrückt und das Lamellenpaket 11,14 getrennt. Durch die Lösung der Lamellenanordnungen 11,14 voneinander ist die Drehmomentübertragung zwischen dem Zahnrad 2 und dem Kupplungsgehäuseteil 13 über die Nabe 15 unterbrochen und die Schraubenwelle 6 hört auf zu rotieren.

Das bedeutet, dass in einem kurzen Zeitraum zu Beginn der Freischaltung der Kontaktierung der Oberflächen des stehenden Schaltkolbens 5 und des rotierenden Endteils 18 eine Belastung der beiden sich berührenden Oberflächen auftritt. Um einen Verschleiß zu vermeiden, ist zwischen beiden Oberflächen ein Axialgleitlager 20 vorgesehen. Das Axialgleitlager 20 ist mit Öl durchflutet.

Die Federdruck-Lamellenkupplung 1 kann in einem vom Kompressorgehäuse 4 abstehenden Hohlzylindergehäuse 36 montiert und damit geschützt angeordnet sein.

Die Darstellungen der Fig. 1 und der Fig. 2 unterscheiden sich im Wesentlichen zeichnerisch dadurch, dass in Fig. 2 die Verschiebung des Schaltkolbens 5, der größere Freiraum im Kolbenraum 17 infolge der Druckluftbeaufschlagung, die zusammengepressten Tellerfedern 16 sowie die Verschiebung 37 des Kupplungsgehäuseteils 13 gegenüber dem Hohlzylindergehäuse 36 am Kompressor 19 in Bezug auf Fig. 1 augenscheinlich sind.

Als Federanordnung 16 eignen sich vorzugsweise Tellerfedern, weil die Federkraft einer Tellerfeder 16 einer flachen Kraft-Weg-Kennlinie folgt, wobei mit einer kleinen Wegänderung auch eine sehr kleine Kraftänderung erzeugt werden kann.

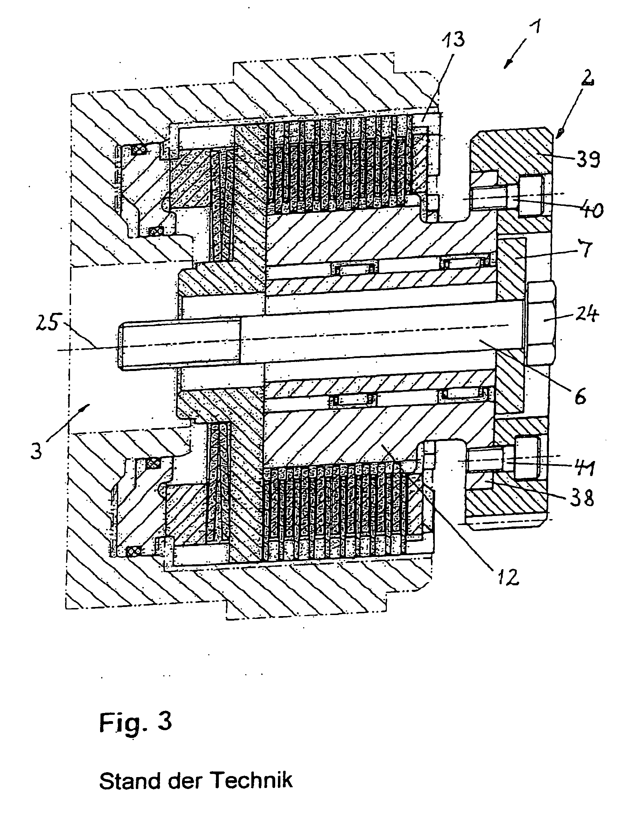

In Fig. 3 kann der Antrieb 2 gegenüber den Fig. 1 und 2 auch als mehrteiliger Körper ausgebildet sein. Der hülsenartige Innenkörper 12 weist einen zum Antrieb 2 gerichteten Flansch 38 auf, der aus dem Kupplungsgehäuseteil 13 herausgeführt ist und der Verschraubungsmöglichkeiten aufweisen kann. An dem Flansch 38 kann eine Zahnkranzscheibe/ein Zahnkranz 39 oder eine antriebsgekoppelte Scheibe od.dgl., z.B. mittels Verschraubungen 40,41, befestigt sein.

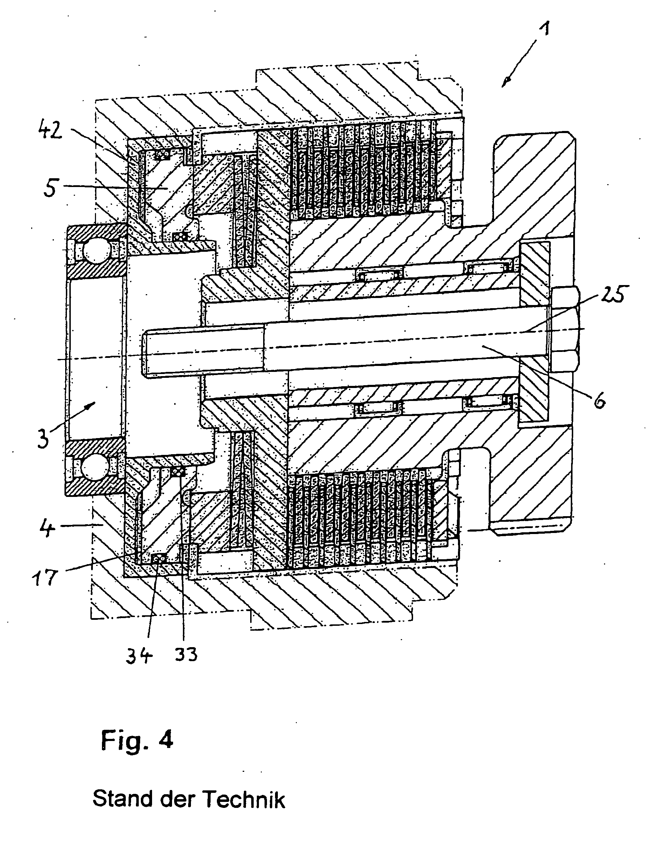

In einer Verbesserung der Federdruck-Lamellenkupplung 1 kann, wie in Fig. 4 gezeigt ist, zur verschleißarmen Betätigung des Schaltkolbens 5 ein ringnutartiger Einsatz 42 in das etwas gemäß der Fig. 1 bis 3 volumenmäßig mehr ausgesparte und angepasste Kolbengehäuse 4 eingebracht sein, wobei der Einsatz 42 dem Schaltkolben 5 zugewendet eine Oberfläche mit erhöhter Güte aufweist. Die am Schaltkolben 5 anliegende Innenwandung des Einsatzes 42 kann eine Oberflächenbehandlung erhalten, indem sie vor der Montage z.B. chemisch vernickelt oder plasmanitriert wird. Der Oberflächenschutz kann auch durch eine andere Oberflächenbehandlung erreicht werden, so dass auch ein besseres Dichtsystem am Schaltkolben 5 eingebracht werden kann, um einen Verschleiß weitgehend zu vermeiden.

Der Schaltkolben 5 kann im Kolbenraum 17 über kolbenrandseitige Dichtungselemente 33,34 zur Kompressorgehäuseringnut 27 oder zum eingebrachten Einsatz 42 abgedichtet sein.

Der ringnutförmige Einsatz 42 erfordert zwar, dass die dem Kolbenraum 17 zugewiesene Aussparung von Anfang an etwas größer ausgebildet wird, aber dafür ist die Pressmontage des Einsatzes und die Montage des Schaltkolbens 5 technologisch einfacher durchführbar. In dem Einsatz 42 kann sich dann je nach anliegendem Luftdruck und vorhandener Tellerfedervorspannung der Schaltkolben 5 bewegen.

Die Wiederzuschaltung des Zustandes der Kupplung (Übergang von Fig. 2 zu Fig. 1) infolge geregelter Überdruckbelastung von an den Kompressor 19 angeschlossenen Druckluftbehältern (nicht eingezeichnet) aus dem Zustand der Freischaltung erfolgt durch Abschaltung der Druckluftzufuhr zum Kolbenraum 17. Danach drückt die Tellerfeder 16 das Endteil 18 des Kupplungsgehäuseteils 13 und somit das Kupplungsgehäuseteil 13 in Richtung zum Kompressorgehäuse 4. Sie schiebt damit den Schaltkolben 5 in den luftdrucklosen Kolbenraum 17 zurück, so dass schließlich der Druckkontakt im Axialgleitlager 20 des Schaltkolbens 5 zum Endteil 18 aufgehoben wird.

Gleichzeitig bewegen sich mit der Verschiebung des Kupplungsgehäuseteils 13 in Richtung zum Kompressorgehäuse 4 die Lamellenanordnungen 11 und 14 aufeinander zu, kontaktieren bei weiterer Abnahme des Luftdrucks im Kolbenraum 17 miteinander und bilden nach Unterschreitung des vorgegebenen Lösungsdrucks wieder ein fest verbundenes Lamellenpaket. Damit ist der Kraftschluss wieder hergestellt, die Drehmomentübertragung erfolgt vom Antrieb 2 über den antriebsangeformten Innenkörper 12, über das Lamellenpaket zum Kupplungsgehäuseteil 13 und von da über die an der mit der Kompressorwelle 3 fest verbundenen Schraubenwelle 6, so dass die Drehmomentübertragung innerhalb des Einbauraums des Kupplungsgehäuseteils 13 verbleibt.

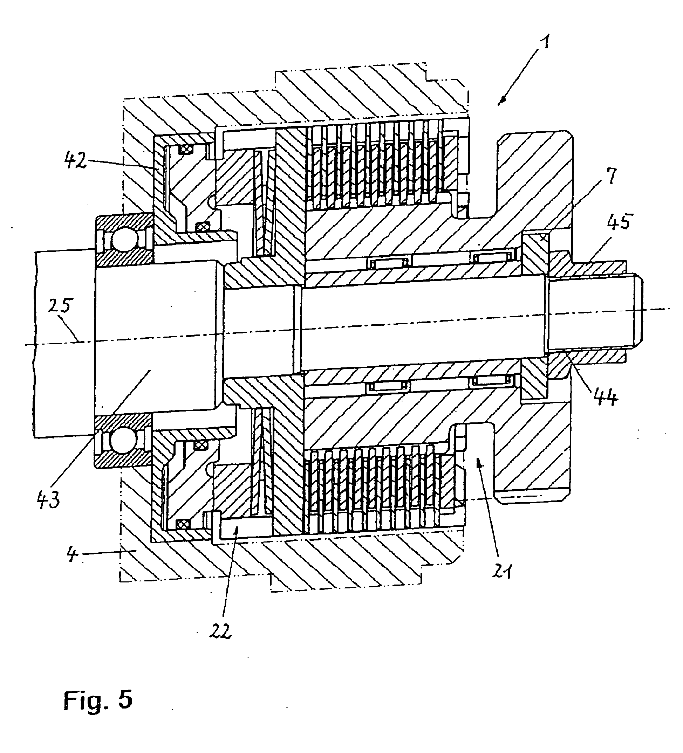

Erfindungsgemäß ist in Fig. 5 die Federdruck-Lamellenanordnung 1 des erfindungsgemäßen Kompressors 19 nach Fig. 4 mit einer über das Kompressorgehäuse 4 hinausreichenden verjüngten Kompressorwelle 43 versehen. Die Kompressorwelle 43 kann im Bereich des Einsatzes 42 drehgelagert sein. Die Verjüngung der Kompressorwelle 43 kann in mehreren Abschnitten kupplungselementeanhängig stufenförmig ausgebildet sein, je nachdem, welche Bauelemente der beiden Kupplungsbaugruppen 21,22 zum Kontakt mit der Kompressorwelle 43 vorgesehen sind. Der Endbereich der Kompressorwelle 43 ist mit einem Gewinde 44 versehen, auf das eine Befestigungsmutter 45 zur Halterung der Halterungsscheibe 7 aufschraubbar ist.

Die Erfindung ermöglicht es, bei Ausbildung einer kurzen Länge des Kupplungsgehäuseteils 13 zwischen Antrieb 2 und Kompressorgehäuse 4 und eines geringeren Einbauraums innerhalb des Kupplungsgehäuseteils 13 die Federdruck-Lamellenkupplung 1 mit weniger Bauteilen zu versehen, was einfacheren Montageaufwand und weniger Kosten erfordert.

### Bezugszeichenliste

- 1: Federdruck-Lamellenkupplung
- 2: Antrieb
- 3: Kompressorwelle
- 4: Kompressorgehäuse
- 5: Schaltkolben
- 6: Schraubenwelle
- 7: Antriebsscheibe
- 8: Buchse
- 9: Erstes Nadellager
- 10: Zweites Nadellager
- 11: Innenlamellenanordnung
- 12: Innenkörper
- 13: Kupplungsgehäuseteil
- 14: Außenlamellenanordnung
- 15: Nabe
- 16: Federanordnung
- 17: Kolbenraum
- 18: Endteil
- 19: Kompressor
- 20: Axialgleitlager
- 21: Erste Kupplungsbaugruppe
- 22: Zweite Kupplungsbaugruppe
- 23: Ausnehmung
- 24: Schraubenkopf
- 25: Kompressorwellenachse
- 26: Fortsätze
- 27: Ringnut
- 28: Nutöffnung
- 29: Druckfläche
- 30: Druckluftleitung
- 31: Deckelscheibe
- 32: Fingerendbereich
- 33: Erstes Dichtungselement
- 34: Zweites Dichtungselement
- 35: Abstand
- 36: Hohlzylindergehäuse
- 37: Verschiebung
- 38: Flansch
- 39: Zahnkranzscheibe
- 40: Erste Verschraubung
- 41: Zweite Verschraubung
- 42: Einsatz
- 43: Verjüngte Kompressorwelle
- 44: Gewinde
- 45: Befestigungsmutter

## Patentansprüche

1. Kompressor (19) mit einer Federdruck-Lamellenkupplung (1), die aus zwei Kupplungsbaugruppen (21,22) besteht, von denen die eine Kupplungsbaugruppe (21) einen Antrieb (2) und eine damit in Verbindung stehende Innenlamellenanordnung (11) aufweist und die andere Kupplungsbaugruppe (22) mit einer Kompressorwelle (3) verbunden ist und ein hohles, fingerartig freigeschnittenes Kupplungsgehäuseteil (13) mit einer zugehörigen Außenlamellenanordnung (14) und einem zu einem Kompressorgehäuse (4) gerichteten, zum Kupplungsgehäuseteil (13) gehörenden, scheibenartigen Endteil (18) aufweist, wobei der anderen Kupplungsbaugruppe (22) ein druckluftbeaufschlagbarer, ringförmiger Schaltkolben (5) zugeordnet ist, der bei Druckluftbeaufschlagung eine Freischaltung und bei Druckluftlosigkeit eine Kupplung zwischen den beiden Lamellenanordnungen (11,14) herbeiführt,
wobei den beiden Kupplungsbaugruppen (21,22) durchgängig die Kompressorwelle (3,43) zugeordnet ist, wobei dem von der Kompressorwelle (3,43) unabhängigen Antrieb (2) ein hülsenartiger Innenkörper (12) angeformt ist, der auf der Kompressorwelle (3,43) drehbar gelagert ist und auf dem die Innenlamellenanordnung (11) befestigt ist, wobei das Kupplungsgehäuseteil (13) mit einer auf der Kompressorwelle (3,43) befestigten Nabe (15) im Eingriff steht, zwischen der und dem Endteil (18) eine Federanordnung (16) in Vorspannung vorgesehen ist, wobei das Endteil (18) über ein Axialgleitlager (20) dem Schaltkolben (5) gegenüberliegend angeordnet ist, der in einer Ringnut (27) im Kompressorgehäuse (4) integriert und entgegen der Vorspannung der Federanordnung (16) mit dem Endteil (18) zur druckluftgesteuerten axialen Verschiebung (37) des Kupplungsgehäuseteils (13) Kontakt herstellend axial verschiebbar gelagert ist,
**dadurch gekennzeichnet,**
**dass** die verjüngte durchgängige Kompressorwelle (43) im Bereich vor der Kupplung (1) drehgelagert ist, wobei die Verjüngung der Kompressorwelle (3,43) in mehreren axial gerichteten Abschnitten kupplungselementezugeordnet stufenförmig ausgebildet ist.

2. Kompressor nach Anspruch 1,
**dadurch gekennzeichnet,**
**dass** der verjüngte Endbereich der Kompressorwelle (43) mit einem Gewinde (44) versehen ist, auf das eine Befestigungsmutter (45) für eine Halterungsscheibe (7) zur Halterung des Antriebs (2) aufschraubbar ist.

3. Kompressor nach Anspruch 1 oder 2,
**dadurch gekennzeichnet,**
**dass** der Antrieb (2) der Kupplung eine an dem Innenkörper (12) angeformte Scheibe oder ein an dem Innenkörper (12) angeformtes Zahnrad darstellt.

4. Kompressor nach Anspruch 1 oder 2,
**dadurch gekennzeichnet,**
**dass** der Antrieb (2) der Kupplung als mehrteiliger Körper ausgebildet ist, wobei der hülsenartige Innenkörper (12) einen zum Antrieb (2) gerichteten Flansch (38) aufweist, der aus dem Kupplungsgehäuseteil (13) herausgeführt ist und an dem wahlweise eine Zahnkranzscheibe (39) oder eine antriebsgekoppelte Scheibe befestigt ist.

5. Kompressor nach Anspruch 1,
**dadurch gekennzeichnet,**
**dass** die Ringnut (27) als eine Kompressorgehäuseringnut oder ein in der Kompressorgehäuseringnut zusätzlich eingebrachter, befestigter ringnutartiger Einsatz (42) ausgebildet ist.

6. Kompressor nach Anspruch 5,
**dadurch gekennzeichnet,**
**dass** eine Nutöffnung (28) der Ringnut (27) zum Antrieb (2) gerichtet ist, wobei die Ringnut (27) innenwandungsseitig mit einer druckluftbeaufschlagbaren Fläche (29) des Schaltkolbens (5) einen zum Schaltkolben (5) gehörenden Kolbenraum (17), dem eine Druckluftleitung (30) zugeführt ist, begrenzt.

7. Kompressor nach Anspruch 1,
**dadurch gekennzeichnet,**
**dass** zwischen einer Befestigungsmutter (45) und dem innenkörperangeformten Antrieb (2) die Halterungsscheibe (7) für eine die Kompressorwelle (43) umfassende Buchse (8) angebracht ist.

8. Kompressor nach Anspruch 7,
**dadurch gekennzeichnet,**
**dass** die Befestigungsmutter (45) und die Halterungsscheibe (7) in einer Ausnehmung (23) des innenkörperangeformten Antriebs (2) versenkt sind.

9. Kompressor nach den Ansprüchen 1 bis 8,
**dadurch gekennzeichnet,**
**dass** eine Lagerung zwischen der der Kompressorwelle (43) fest zugeordneten Buchse (8) und der Innenwandung des Innenkörpers (12) vorhanden ist, wobei die Lagerung wahlweise eine Gleitlagerung oder eine Nadellagerung ist, die aus zwei Nadellagern (9,10) besteht, wobei auf den beiden Nadellagern (9,10) der Innenkörper (12) des Antriebs (2) drehbar gelagert ist.

10. Kompressor nach Anspruch 1,
**dadurch gekennzeichnet,**
**dass** das Kupplungsgehäuseteil (13) im Bereich der Anformung von Innenkörper (12) und Antrieb (2) durch eine eingebaute Deckelscheibe (31) geschlossen ist, die an den freien Fingerendbereichen (32) des Kupplungsgehäuseteils (13) befestigt ist.

11. Kompressor nach Anspruch 1,
**dadurch gekennzeichnet,**
**dass** zwischen der Nabe (15) und dem Endteil (18) die Federanordnung (16) in Form von mindestens einer Tellerfeder zur Vorspannung zwischen Nabe (15) und Endteil (18) angeordnet ist, um eine gesteuerte Verschiebbarkeit des Kupplungsgehäuseteils (13) zu realisieren.

12. Kompressor nach Anspruch 11,
**dadurch gekennzeichnet,**
**dass** die Nabe (15) mit der Kompressorwelle (43) fest verbunden ist, wobei die feste Verbindung als eine Passfederverbindung ausgebildet ist.

13. Kompressor nach Anspruch 11,
**dadurch gekennzeichnet,**
**dass** die Nabe (15) als eine mit der Kompressorwelle (43) verbundene passfedergehalterte Scheibe ausgebildet ist.

14. Kompressor nach Anspruch 5 oder 6,
**dadurch gekennzeichnet,**
**dass** der ringnutartige Einsatz (42) dem Schaltkolben (5) zugewendete, durch eine Oberflächenbehandlung vergütete Oberflächen aufweist.

15. Kompressor nach Anspruch 1 oder 6,
**dadurch gekennzeichnet,**
**dass** der Schaltkolben (5) über kolbenrandbereichsseitige Dichtungselemente (33,34) in einem Kolbenraum (17) oder zu einem eingebrachten Einsatz (42) abgedichtet ist.

## Claims

1. Compressor (19) with a spring pressure multiplate clutch (1), consisting of two clutch parts (21,22) the first of which (21) features a drive (2) and a linked inner multiplate arrangement (11) and the second of which (22) is linked to a compressor shaft (3) and features a hallow finger-type cut-out clutch housing part (13) with an associated outside multiplate arrangement (14) and a disc-like end area (18) which is directed towards a compressor housing (4) and belongs to the clutch housing part (13); whereby an angular switching piston (5) arranged to be acted upon by compressed air is allocated to the other clutch part (22), which - between the two multiplate arrangement (11,14) - results in a release in the case of a compressed air impact and in a coupling in the case of absence of air pressure, whereby the compressor shaft (3,43) is allocated along the entire length of the two clutch parts (21,22);
whereby a sleeve-like inner body (12) is moulded to the drive (2) which is independent from the compressor shaft (3,43); this inner body can rotate around the compressor shaft (3,43) and the inner multiplate arrangement (11) is fixed to it; whereby the clutch housing part (13) is meshed with a hub (15) fixed to the compressor shaft (3,43) and a spring arrangement (16) in precompression is provided between this hub and the end area (18), whereby the end area (18) is arranged opposite to the switching piston (5) via an axial friction bearing (20), which is integrated in an annular slot (27) into the compressor housing (4) and, in opposite direction to the precompression of the spring arrangement (16), can be adjusted in axial direction to establish contact with the end area (18) for the air pressure-controlled displacement (37) of the clutch housing part (13),
**characterized in**
**that** the tapered continuous compressor shaft (43) can be rotated in the area of the clutch (1), whereby the tapering of the compressor shaft (3,43) in several sections in axial direction is developed in steps and allocated to the respective clutch element.

2. Compressor according to claim 1,
**characterized in**
**that** the tapered end area of the compressor shaft (43) is equipped with a thread (44), onto which a fastening nut (45) for a holding disc (7) may be screwed for the mount of the drive (2) .

3. Compressor according to claim 1 or 2,
**characterized in**
**that** the drive (2) of the clutch represents a disc moulded to the inner body (12) or a cogwheel moulded to the inner body (12).

4. Compressor according to claim 1 or 2,
**characterized in**
**that** the drive (2) of the clutch is developed as a body consisting of several parts, whereby the sleeve-like inner body (12) features a flange (38) directed towards the drive (2), which leads out of the clutch housing part (13) and to which an driveplate (39) or a drive-coupled disc may optionally be fixed.

5. Compressor according to claim 1,
**characterized in**
**that** the annular slot (27) is formed as an annular slot of a compressor housing or as an annular slot-like insert (42) which is additionally inserted and fixed in the annular slot of a compressor housing.

6. Compressor according to claim 5,
**characterized in**
**that** a slot opening (28) of the annular slot (27) is directed towards the drive (2), whereby the annular slot (27) on its inner wall, together with an area (29) of the switching piston (5) to be acted upon by compressed air, confines a piston space (17) belonging to the switching piston (5) which is connected to an air pressure line (30).

7. Compressor according to claim 1,
**characterized in**
**that**, between a fastening nut (45) and a drive (2) moulded to the inner body, the holding disc (7) for a bushing (8) encompassing the compressor shaft (43) is located.

8. Compressor according to claim 7,
**characterized in**
**that** the fastening nut (45) and the holding disc(7) are plunged into a clearance space (23) of the drive (2) which is moulded to the inner body.

9. Compressor according to the claims 1 to 8,
**characterized in**
**that** a bearing is present between the bushing (8) assigned to the compressor shaft (43) and the inner wall of the inner body (12), whereby the bearing is optionally a friction bearing or a needle bearing which consists of two needle bearings (9,10), whereby the inner body (12) of the drive (2) can be rotated on both needle bearings (9,10).

10. Compressor according to claim 1,
**characterized in**
**that** the clutch housing part (13) in the area of the moulding of the inner body (12) and the drive (2) is closed off by an inserted cover pane (31) which is fixed to the free finger end areas (32) of the clutch housing part (13).

11. Compressor according to claim 1,
**characterized in**
**that**, between the nut (15) and the end area (18), the spring arrangement (16) is structured in the form of at least a cup spring for the precompression between the nut (15) and the end area (18) in order to realise a controlled adjustability of the clutch housing part (13).

12. Compressor according to claim 11,
**characterized in**
**that** the nut (15) is permanently connected to the compressor shaft (43), whereby the fixed connection is formed as an adjusting spring connection.

13. Compressor according to claim 11,
**characterized in**
**that** the nut (15) is formed as a disc which is connected to the compressor shaft (43) and features a mount fixture for an adjusting spring.

14. Compressor according to claim 5 or 6,
**characterized in**
**that** the annular slot-like insert (42) features a surface which faces the switching piston (5) and is coated with a surface treatment.

15. Compressor according to claim 1 or 6,
**characterized in**
**that** the switching piston (5) is sealed by means of sealing elements (33,34) fitted to the piston edges in a piston space (17) or by means of an introduced insert (42).

## Revendications

1. Compresseur (19) à embrayage multidisque à pression de ressort (1) composé de deux organes d'embrayage (21, 22) dont un organe d'embrayage (21) présente un entraînement (2) et une disposition multidisque intérieure (11) étant reliée à celui-ci et l'autre organe d'embrayage (22) est relié à un arbre de compresseur (3) et présente une partie de boîtier d'embrayage (13) creuse libérée par découpage en forme de doigt avec une disposition multidisque extérieure (14) et une extrémité (18) en forme de disque faisant partie de la partie de boîtier d'embrayage (13), dirigée vers un corps de compresseur (4), un piston de commutation (5) pouvant être soumis à l'air comprimé en forme d'anneau étant affecté à l'autre organe d'embrayage (22) qui, en cas de sollicitation par l'air comprimé, déclenche une déconnexion et en cas d'absence d'air comprimé, déclenche un couplage entre les deux dispositions multidisque (11, 14),
l'arbre de compresseur (3, 43) étant affecté aux deux organes d'embrayage (21, 22), un corps intérieur (12) en forme de douille, logé de façon à pouvoir tourner sur l'arbre de compresseur (3, 43) et fixé sur la disposition multidisque intérieure (11), étant formé à l'entraînement (2) dépendant de l'arbre de compresseur (3, 43); la partie de boîtier d'embrayage (13) étant en prise avec un moyeu (15) fixé sur l'arbre de compresseur (3, 43), entre le moyeu et la partie d'extrémité (18), une disposition de ressorts en prétension (16) étant prévue; la partie d'extrémité (18) étant disposée à l'opposé du piston de commutation (5) par l'intermédiaire d'un palier à glissement axial (20) qui est intégré dans une rainure annulaire (27) se trouvant dans le corps de compresseur (4) et logé, de façon à pouvoir se déplacer de façon axiale en créant le contact, contre la prétension de la disposition de ressorts (16) avec la partie d'extrémité (18) dirigé vers le déplacement axial (37) commandé par air comprimé de la partie de boîtier d'embrayage (13)
**caractérisé en ce**
**que** l'arbre de compresseur (43) continu réduit est logé de façon à pouvoir tourner dans la zone du couplage (1), la réduction de l'arbre de compresseur (3, 43) étant formé de façon échelonnée en plusieurs segments à orientation axiale, avec affectation aux éléments du couplage.

2. Compresseur selon la revendication 1
**caractérisé en ce**
**que** la zone d'extrémité réduite de l'arbre de compresseur (43) est pourvu d'un filetage (44) sur lequel un écrou de fixation (45) pour une rondelle de maintien (7) destinée à maintenir l'entraînement (2) peut être vissé.

3. Compresseur selon la revendication 1 ou 2
**caractérisé en ce**
**que** l'entraînement (2) du couplage représente un disque formé au corps intérieur (12) ou une roue dentée formée au corps intérieur (12).

4. Compresseur selon la revendication 1 ou 2
**caractérisé en ce**
**que** l'entraînement (2) du couplage est formé en tant que corps en plusieurs parties, le corps intérieur (12) en forme de douille présentant une bride (38) dirigée vers l'entraînement (2) qui est sortie hors de la partie de boîtier d'embrayage (13) et à laquelle est fixé au choix une roue à couronne dentée (39) ou une roue couplée par entraînement.

5. Compresseur selon la revendication 1
**caractérisé en ce**
**que** la rainure annulaire (27) est formée en tant que rainure annulaire de boîtier de compresseur ou comme élément (42) en forme de rainure annulaire installé en supplément et fixé dans la rainure annulaire de boîtier de compresseur.

6. Compresseur selon la revendication 5
**caractérisé en ce**
**qu'**une ouverture de rainure (28) de la rainure annulaire (27) est orientée vers l'entraînement (2), la rainure annulaire (27) limitant, côté paroi intérieure par une surface (29) pouvant être sollicitée par air comprimée du piston de commutation (5), un espace de piston (17) appartenant au piston de commutation (5) auquel une conduite d'air comprimé (30) est affectée.

7. Compresseur selon la revendication 1
**caractérisé en ce**
**qu'**entre un écrou de fixation (45) et l'entraînement (2) formé à l'intérieur du boîtier est disposée la rondelle de maintien (7) pour la douille (8) contenant l'arbre de compresseur (43).

8. Compresseur selon la revendication 7
**caractérisé en ce**
**que** l'écrou de fixation (45) et la rondelle de maintien (7) sont abaissés dans une cavité (23) de l'entraînement formé au corps intérieur (2).

9. Compresseur selon les revendications 1 à 8
**caractérisé en ce**
**qu'**il existe un logement entre la douille (8) affectée de façon fixe à l'arbre de compresseur (43) et la paroi intérieure du corps intérieur (12), le logement étant au choix un logement coulissant ou un logement à aiguilles qui est composé de deux roulements à aiguilles (9, 10), le corps intérieur (12) de l'entraînement (2) étant logé de façon à pouvoir tourner sur les deux roulements à aiguilles (9, 10).

10. Compresseur selon la revendication 1
**caractérisé en ce**
**que** la partie de boîtier d'embrayage (13) est fermée dans la zone de l'adaptation du corps intérieur (12) et de l'entraînement (2) par un disque de couvercle (31) qui est fixé aux extrémités de doigt libres (32) de la partie de boîtier d'embrayage (13).

11. Compresseur selon la revendication 1
**caractérisé en ce**
**qu'**entre le moyeu (15) et la partie d'extrémité (18), la disposition de ressorts (16) est disposée sous la forme d'au moins une rondelle-ressort pour prétension entre le moyeu (15) et la partie d'extrémité (18) pour réaliser une mobilité commandée de la partie de boîtier d'embrayage (13).

12. Compresseur selon la revendication 11
**caractérisé en ce**
**que** la moyeu (15) est raccordé de façon fixe à l'arbre de compresseur (43), le raccordement fixe étant formé en tant que raccordement de ressort d'ajustage.

13. Compresseur selon la revendication 11
**caractérisé en ce**
**que** la moyeu (15) est formé comme une rondelle maintenue par ressort d'ajustage reliée à l'arbre de compresseur (43).

14. Compresseur selon la revendication 5 ou 6
**caractérisé en ce**
**que** l'élément en forme de rainure annulaire (42) orientée vers le piston de commutation (5) présente des surfaces trempées et revenues par un traitement de surface.

15. Compresseur selon la revendication 1 ou 6
**caractérisé en ce**
**que** le piston de commutation (5) est rendu étanche par des éléments étanches (33, 34) côté zone périphérique du piston dans un espace de piston (17) ou avec un élément (42) intégré.
